(19) Europäisches Patentamt
European Patent Office
Office européen des brevets

(11) Veröffentlichungsnummer: **0 048 320**
**B1**

(12) **EUROPÄISCHE PATENTSCHRIFT**

(45) Veröffentlichungstag der Patentschrift: **01.02.84**

(51) Int. Cl.³: **C 08 F 2/26,** C 08 F 20/58, C 08 F 246/00

(21) Anmeldenummer: **81104821.4**

(22) Anmeldetag: **23.06.81**

(54) **Emulgiermittelfreie wässrige Kunststoffdispersion.**

(30) Priorität: **19.09.80 DE 3035375**

(43) Veröffentlichungstag der Anmeldung: **31.03.82 Patentblatt 82/13**

(45) Bekanntmachung des Hinweises auf die Patenterteilung: **01.02.84 Patentblatt 84/5**

(84) Benannte Vertragsstaaten: **DE FR GB IT NL SE**

(56) Entgegenhaltungen:
**DE - A - 2 549 840**
**FR - A - 1 536 863**
**FR - A - 2 235 115**

(73) Patentinhaber: **Röhm GmbH, Kirschenallee Postfach 4242, D-6100 Darmstadt 1 (DE)**

(72) Erfinder: **Besecke, Siegmund, Dr., Heidelberger Landstrasse 62, D-6100 Darmstadt 13 (DE)**
Erfinder: **Fink, Herbert, Dr., Berliner Strasse 24, D-6101 Bickenbach (DE)**
Erfinder: **Sütterlin, Norbert, Dr., Am Horeth 23, D-6105 Ober-Ramstadt (DE)**
Erfinder: **Markert, Gerhard, Dr., Leipziger Strasse 25, D-6105 Ober-Ramstadt-Eiche (DE)**
Erfinder: **Schröder, Günter, Dr., Leipziger Strasse 7, D-6105 Ober-Ramstadt (DE)**
Erfinder: **Tilch, Willi, Wilhelmstrasse 63, D-6107 Reinheim (DE)**

**EP 0 048 320 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Emulgiermittelfreie wäßrige Kunststoffdispersion

Die Erfindung betrifft wäßrige Kunststoffdispersionen, die keine ionischen und vorzugsweise auch keine nichtionischen Emulgiermittel enthalten. Es ist bekannt, daß man bei der Herstellung von wäßrigen Kunststoffdispersionen auf niedermolekulare Emulgier- bzw. Dispergiermittel weitgehend verzichten kann, wenn der dispergierte Kunststoff Einheiten mit ionischen Gruppen, insbesondere Alkalimetallsulfonatgruppen, eingebaut enthält. Es ist jedoch bisher nicht gelungen, in derartigen Dispersionen auf niedermolekulare, Emulgiermittel vollständig zu verzichten. Vor allem für die gezielte Einstellung der Teilchengröße haben sich kleine Mengen an anionischen Emulgiermitteln bisher als unerläßlich erwiesen.

Nach der DE-A-1 932 395 werden beständige Latizes, die keine wasserlöslichen Netzmittel oder oberflächenaktive Mittel enthalten, dadurch hergestellt, daß man ungesättigte, überwiegend wasserunlösliche Monomere zusammen mit 0,1 bis 5 Gew.-%, bezogen auf das Monomergewicht, an polymerisierbaren organischen Sulfonsäuren bzw. Alkalisulfonaten der Formel

$$R-Z-Q-SO_3M$$

in wäßriger Emulsion polymerisiert. In der Formel kann Z ein Sauerstoffatom oder eine Ester- oder Amidogruppe und Q ein aliphatischer oder aromatischer Kohlenwasserstoffrest sein. Bei hinreichender Größe der Gruppe Q hat die Verbindung seifenähnliche Eigenschaften. Während der Emulsionspolymerisation wirkt die Verbindung als ein niedermolekulares Emulgiermittel. Sie wird jedoch allmählich in den entstehenden Kunststoff eingebaut, so daß sie am Ende der Emulsionspolymerisation aus der wäßrigen Phase verschwunden ist. Obwohl während der Emulsionspolymerisation eine als Emulgiermittel wirksame Substanz vorhanden ist, wird zur Steuerung der Teilchengröße eine geringe Menge an bekannten Netzmitteln, z. B. alkalischen Seifen, zusätzlich mitverwendet. Die Menge des niedermolekularen, nicht polymerisierbaren Emulgiermittels beträgt beispielsweise 0,4% der Wasserphase.

Th. Mills und R. Yocum haben im Journal of Paint Technology, Bd. 39 (1967), S. 532—535, die Herstellung von Kunststoffdispersionen mit eingebauten Einheiten von 2-Sulfoäthylmethacrylat beschrieben. Obwohl auch sie den Verzicht auf niedermolekulare Emulgiermittel angestrebt haben, um schwach schäumende Dispersionen und eine geringe Wasserempfindlichkeit der daraus erzeugten Filme zu erreichen, konnten sie auf wenigstens geringe Mengen an anionischen Emulgatoren nicht verzichten. Bei Verwendung von 0,01 Gew.-% (bezogen auf Monomergewicht) an anionischem Emulgator wurde eine Dispersion mit verhältnismäßig groben Teilchen, nämlich 2500 Å, erhalten. Um die Teilchengröße auf 700 Å herabzusetzen, mußten 1,25% des niedermolekularen Emulgiermittels mitverwendet werden, wodurch das Ziel einer emulgiermittelfreien Dispersion verfehlt wird.

Das einpolymerisierbare Emulgiermittel erwies sich nicht als geeignet, um die Teilchengröße zu steuern. Während herkömmliche Emulgiermittel in zunehmender Menge die Teilchengröße herabsetzen, wurde für Sulfoäthylmethacrylat eher der entgegengesetzte Effekt beobachtet.

Aufgrund dieser Erfahrungen wurde bisher immer ein Zusatz von üblichen niedermolekularen Emulgatoren neben den polymerisierbaren Sulfonsäuren oder deren Salzen mitverwendet. In der DE-A-2 427 341 wird die Größe dieses Zusatzes auf nicht mehr als 0,2 Gew.-% (bezogen auf Monomere) beziffert. Die DE-A-2 250 517 schreibt einen Zusatz von 0,3 bis 3% an anionischen Emulgatoren vor, um Kunststoffdispersionen mit polymerisierten Einheiten von Monomeren der Formel

$$CH_2=CH-CO-X-Y-SO_3Me$$

herzustellen, wobei X Sauerstoff oder eine NH-Gruppe, Me ein Alkali- oder Ammonium und Y ein Alkylrest mit 2 bis 10 C-Atomen ist. Die bevorzugten sulfogruppenhaltigen Monomeren enthalten als Y $C_4$-Gruppen. In Abwesenheit von weiteren Emulgiermitteln — so lehrt diese Druckschrift (Sp. 3, Z. 36—59) — entstehen hohe Anteile an Koagulat und eine nicht lagerstabile Dispersion. Auch die FR-A-1 536 863 geht davon aus, daß zur Emulsionspolymerisation in Gegenwart von Monomeren der Formel

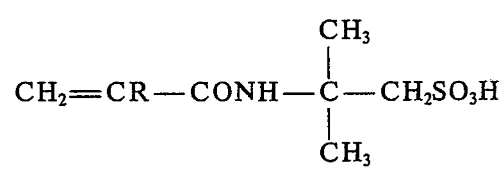

übliche Emulgiermittel mitverwendet werden müssen.

Selbst wenn einige dieser Druckschriften eine starke Verminderung des Emulgiermittelgehalts

gegenüber solchen Kunststoffdispersionen, die keine eingebauten Sulfonatgruppen enthalten, zulassen, so kann der nachteilige Einfluß dieser Emulgiermittel nicht übersehen werden. Wie bereits erwähnt, sind die mit äußerst geringen Mengen an herkömmlichen niedermolekularen Emulgiermitteln hergestellten Kunststoffdispersionen verhältnismäßig grobteilig. Dies wirkt sich nachteilig auf die Stabilität der Dispersion sowie auf die Filmbildung aus. Emulgiermittel sind bekanntlich schon in äußerst geringen Mengen wirksam. Sie fördern das Eindringen von Wasser in die Poren eines aus der Dispersion erzeugten Filmes und leisten damit seiner Zerstörung durch Korrosion Vorschub; das gilt insbesondere für anionische Emulgiermittel. Es war das Ziel der vorliegenden Erfindung, Kunststoffdispersionen herzustellen, die frei von niedermolekularen ionischen Emulgiermitteln und vorzugsweise auch von nichtionischen Emulgiermitteln sind und trotzdem eine unter anwendungstechnischen Gesichtspunkten optimale, d. h. wählbare Teilchengröße haben. Als niedermolekulare Emulgatoren ionischer oder nichtionischer Art werden Verbindungen mit einem Molekulargewicht unter 2000 angesehen. Die Dispersionen gelten als emulgiermittelfrei, wenn der Gehalt an derartigen Verbindungen unter 0,01 Gew.-%, bezogen auf die Wasserphase, liegt.

Es wurde gefunden, daß Kunststoffdispersionen mit diesen Eigenschaften herstellbar sind, wenn sie die im Anspruch 1 angegebene Zusammensetzung haben. Überraschenderweise läßt sich mit Sulfonsäuren bzw. Sulfonaten der Formel

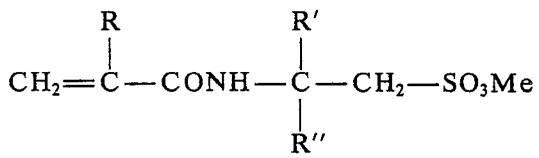

worin R, R′ und R″ die im Anspruch 1 angegebene Bedeutung haben, die Teilchengröße bei der Emulsionspolymerisation ebenso leicht und sicher steuern, wie mit den im Gebiet der Emulsionspolymerisation gebräuchlichen anionischen Emulgiermitteln. Bekanntlich hängen die Teilchengröße und Teilchengrößenverteilung von Emulsionspolymerisaten entscheidend von dem zu Beginn der Polymerisation vorliegenden Emulgiermittelsystem ab. Zu diesem Zeitpunkt liegen die Sulfonsäuren bzw. Sulfonate noch vollständig als niedermolekulare Verbindungen vor. Wenn die Phase der Teilchenbildung abgeschlossen ist, ändert sich das Emulgiermittelsystem allmählich dadurch, daß die Sulfonsäuren bzw. Sulfonate in das entstehende Polymerisat eingebaut werden. Dann ist die Teilchenzahl und somit auch die Teilchengröße festgelegt. Trotz des beständig abnehmenden Gehalts an freiem niedermolekularem Emulgiermittel bleibt die entstehende Dispersion durch die nunmehr fest in das Mischpolymerisat eingebauten Sulfonsäure- bzw. Sulfonatgruppen stabil. Während die bisher bei der Emulsionspolymerisation — und zwar zusätzlich zu nicht polymerisierbaren Emulgatoren — eingesetzten Mengen an polymerisierbaren Sulfonsäuren bzw. Sulfonaten vorwiegend im Bereich von 1 bis 5 Gew.-% des Gesamtmonomerengewichts lagen, enthalten die erfindungsgemäßen Dispersionen in der Regel weit geringere Mengen der anspruchsgemäß gekennzeichneten Sulfonsäuren bzw. Sulfonate; im bevorzugten Falle zwischen etwa 0,1 und 1 Gew.-%. In Sonderfällen kann dieser Bereich über- oder unterschritten werden, jedoch selten über die Grenzen von 0,05 bis 5 Gew.-% hinaus.

Die in den Dispersionen der Erfindung enthaltenen polymerisierbaren Emulgiermittel, die oben formelmäßig gekennzeichnet sind, sind beispielsweise nach der Ritter-Reaktion aus Acryl- oder Methacrylnitril, einem höheren Olefin oder Alkohol und Schwefelsäure zugänglich. Geeignete Herstellungsverfahren sind z. B. in der US-A-3 544 597 und der DE-A-2 523 616 beschrieben. Bevorzugt sind die Verbindungen, in denen R′ = H und R″ ein geradkettiger Alkylrest mit 8 bis 12 C-Atomen ist. Als Beispiele seien 2-N-Acrylamido-2-decan-sulfonsäure, 2-N-Acrylamido-2-dodecan-sulfonsäure und 2-N-Acrylamido-2-tetradecan-sulfonsäure genannt.

Die überlegene Wirkung dieser Verbindungen gegenüber ähnlich aufgebauten Verbindungen, in denen anstelle des Restes R″ kürzere Alkylketten mit 1 bis 4 C-Atomen enthalten sind, zeigt sich in der Beständigkeit von wäßrigen Monomeremulsionen, die zur Emulsionspolymerisation eingesetzt werden können. Je geringer die Beständigkeit der Monomeremulsionen ist, um so schwächer ist der Einfluß auf die Teilchengröße und um so mehr ist man auf die Mitverwendung anderer hoch emulgierwirksamer Dispergiermittel angewiesen. In der nachfolgenden Tabelle ist der prozentuale Grad der Entmischung von wäßrigen Emulsionen von Äthyl- und n-Butylacrylat in Anwesenheit von Ammoniumpersulfat mit 0,1 bzw. 0,25 Gew.-% des jeweiligen Emulgiermittels jeweils nach 2 bis 4 Stunden Standzeit der Emulsionen angegeben. Die Emulsionen enthielten jeweils 62,5 Gew.-% des jeweiligen Monomeren und hatten pH-Werte zwischen 4 und 7,5.

| polymerisierbares Emulgiermittel | Menge Gew.-% | Entmischung von wäßrigen Emulsionen mit 62,5 Äthylacrylat (in Vol.-%) nach 2 h | nach 4 h | 62,5 Butylacrylat (in Vol.-%) nach 2 h | nach 4 h |
|---|---|---|---|---|---|
| Emulsion gemäß der Erfindung | | | | | |
| 2-N-Acrylamido-2-decan-sulfonsäure | 0,1 | <5 | <10 | <10 | <10 |
| | 0,25 | <5 | <10 | <10 | <10 |
| 2-N-Acrylamido-2-dodecan-sulfonsäure | 0,1 | 1 | <10 | 1 | 3 |
| | 0,25 | 1 | <10 | 1 | 1 |
| 2-N-Acrylamido-2-tetradecan-sulfonsäure | 0,1 | 1 | <5 | 0 | 0 |
| | 0,25 | 0 | <5 | 0 | 4 |
| Vergleichsemulsionen | | | | | |
| 2-N-Acrylamido-2-butan-sulfonsäure | 0,1 | 100 | 100 | 100 | 100 |
| | 0,25 | 100 | 100 | 70 | 90 |
| 2-N-Acrylamido-2-hexan-sulfonsäure | 0,1 | 35 | 45 | 98 | 100 |
| | 0,25 | 80 | 85 | 90 | 100 |
| 2-N-Acrylamido-2-(2,4,4-trimethylpentan)-sulfonsäure | 0,1 | 90 | 100 | 60 | 80 |
| | 0,25 | 60 | 90 | 16 | 36 |

Zur Steigerung der Frost- und Elektrolytbeständigkeit können die Dispersionen übliche Mengen an nichtionischen Emulgatoren enthalten, die in der Regel erst nach Abschluß der Polymerisation zugegeben werden und daher keinen Einfluß auf die Teilchengröße ausüben. Typische Emulgiermittel dieser Art sind Addukte von Äthylenoxid an Alkylphenole, Fettalkohole, Fettsäuren, Fettamide, wobei die Zahl der Äthylenoxidreste pro Molekül in weiten Grenzen schwanken kann und vorzugsweise zwischen 10 und 200 liegt. Nichtionische Emulgiermittel wirken sich schwächer als ionische Emulgiermittel auf das Schäumverhalten und die Eigenschaften des aus der Dispersion erzeugten Films aus, so daß schon die Abwesenheit von ionischen Emulgiermitteln in vielen Fällen deutliche Vorteile gewährt. Noch vorteilhafter ist jedoch die gänzliche Abwesenheit von niedermolekularen Emulgiermitteln; die bevorzugten Dispersionen der Erfindung sind daher emulgatorfrei im eingangs angegebenen Sinne.

Da die beanspruchten Emulgiermittel allgemein die Rolle der bei der Emulsionspolymerisation sonst gebräuchlichen niedermolekularen anionischen Emulgiermittel einzunehmen vermögen, können sie zur Herstellung aller bekannten Arten von anionisch bzw. anionisch-nichtionisch stabilisierten Dispersionen eingesetzt werden. Das dispergierte Mischpolymerisat enthält einen wesentlichen Anteil von Einheiten von wenig oder nicht wasserlöslichen Monomeren. Dieser Anteil beträgt im allgemeinen mindestens 40 Gew.-% und bevorzugt mindestens 60 Gew.-%, bezogen auf das Gesamtgewicht der polymerisierbaren Verbindungen. Der übrige Teil der Monomeren kann erheblich oder vollständig wasserlöslich sein.

Als wenig oder nicht wasserlösliche Monomere kommen Alkylester der Acryl- oder Methacrylsäure, beispielsweise mit 1 bis 18 C-Atomen im Alkylrest, welche bevorzugt sind, sowie Acryl- und Methacrylnitril, Styrol, $\alpha$-Methylstyrol, Vinyltoluol, Vinylester, wie Vinylacetat, -formiat, -propionat, -butyrat, Alkylester der Malein-, Fumar- und Itakonsäure, Diene, wie Butadien, Isopren oder Chloropren, Olefine, wie Äthylen, Propylen, Butylen, Isobutylen, ferner Vinylchlorid und Vinylidenchlorid, sowie Gemische von zwei oder mehr dieser Monomeren untereinander in Betracht. Die bevorzugten Dispersionen sind zu mehr als 60 und insbesondere mehr als 80% aus Alkylestern der Acryl- und Methacrylsäure aufgebaut, von denen die Methyl-, Äthyl-, n-Propyl-, Isopropyl-, n-Butyl, iso-Butyl-, Hexyl-, Cyclohexyl, 2-Äthylhexylester die bevorzugtesten sind.

Als wenigstens teilweise wasserlösliche Comonomere, deren Anteil an dem dispergierten Copolymeren nur so groß sein darf, daß dieses — wenigstens in begrenzten pH-Bereichen — nicht wasserlöslich und höchstens mit Wasser angequollen ist, sind zu nennen: $\alpha,\beta$-ungesättigte Mono- und Dicarbonsäuren und deren wasserlösliche Salze, wie Acryl- oder Methacrylsäure, Malein-, Fumar- und

Itakonsäure und deren Halbester oder Halbamide, Acryl- und Methacrylamid, niedere Hydroxyalkylester und Hydroxyalkylamide sowie niedere Aminoalkylester und Aminoalkylamide von ungesättigten polymerisierbaren Carbonsäuren, Vinylpyrrolidon, Vinylimidazol, Vinylimidazoline und Vinylimidazolidine.

Eine weitere Gruppe von möglichen Comonomeren sind vernetzende Monomere, die entweder zwei oder mehr polymerisierbare Gruppen tragen, wie Divinylbenzol, Triallylcyanurat, Glykoldiacrylat oder -dimethacrylat und entsprechende Diester von anderen Glykolen oder Polyolen, oder die eine vernetzungswirksame Gruppe tragen, wie N-Methylolacrylamid, N-Methylolmethacrylamid und deren niedere Alkyläther und Glydicylacrylat und -methacrylat. Die Monomeren dieser Gruppe machen zusammengenommen im allgemeinen nicht mehr als 10 Gew.-% des Mischpolymerisats aus.

Es gehört zu den besonderen Vorzügen der Erfindung, daß die bekannten Verfahren zur Herstellung von anionisch emulgierten Kunststoffdispersionen nahezu unverändert übernommen werden können, indem man den herkömmlichen anionischen Emulgator durch das beanspruchte polymerisierbare Emulgiermittel ersetzt. Das gilt auch für die Vielzahl von Emulsionspolymerisationsverfahren, bei denen Teile oder die Gesamtheit der Monomeren oder bestimmte Monomere gleichmäßig oder in besonderen Zeitabschnitten, etwa zu Beginn oder gegen Ende der Polymerisation, zu dem Polymerisationsgemisch gegeben werden. Besonders bevorzugt ist das Emulsionszulaufverfahren, bei dem wenigstens ein wesentlicher Teil, in der Regel der überwiegende Teil der Monomeren während der Polymerisation in Form einer wäßrigen Emulsion zugegeben wird. Bei diesem Verfahren wirkt sich die hohe Stabilität der wäßrigen Monomeremulsion, die die beanspruchten polymerisierbaren Emulgiermittel enthalten, besonders vorteilhaft aus.

Die gebräuchlichen Polymerisationsinitiatoren, wie z. B. Ammonium- oder Kaliumpersulfat, Wasserstoffperoxid oder wasserlösliche Azoinitiatoren, werden in den üblichen Mengen, die zwischen etwa 0,1 und 2 Gew.-%, bezogen auf die zu polymerisierenden Monomeren, liegen, eingesetzt. Übliche Polymerisationstemperaturen sind 50 bis 100°C, bei Verwendung von Redox-Initiatorsystemen auch darunter. Die Polymerisationsdauer beträgt meistens 1 bis 6 Stunden einschließlich der Nacherhitzungszeit zur Vervollständigung des Umsatzes. Wenn die Dispersion nach Abschluß der Polymerisation auf einen höheren pH-Wert eingestellt wird, beispielsweise durch Zugabe von Ammoniak, kann die Viskosität spürbar zunehmen, was unter anderem von dem Gehalt an der einpolymerisierten Sulfonsäure abhängt. Die Viskosität liegt im allgemeinen im Bereich von 10 bis 50 000 mPa · sec.

Die disperse Phase bildet bei den bevorzugten Dispersionen einen Anteil von 30 bis 65 Gew.-%, insbesondere 45 bis 60 Gew.-%, bezogen auf das Gesamtgewicht der Dispersion. Je nach der eingesetzten Menge des polymerisierbaren Emulgiermittels, insbesondere zu Beginn der Polymerisation, liegt die Teilchengröße der Dispersion überwiegend zwischen 0,05 und 1 µm. Ein besonders bevorzugter Teilchengrößenbereich liegt zwischen 0,05 und 0,6 µm.

In den nachfolgenden Beispielen 1 und 2 wird die Beständigkeit von Monomeremulsionen mit den gemäß der Erfindung eingesetzten Emulgiermitteln im Vergleich zu Emulsionen mit den niederen, weniger wirksamen Homologen der Emulgiermittel dargelegt. In den Beispielen 3 bis 12 ist die Herstellung von Dispersionen gemäß der Erfindung beschrieben.

Beispiel 1

In einem 1-l-Becherglas wurden mittels eines Turbinenrührers in 3 Minuten bei 4000 UpM

| | |
|---|---|
| 240 Teile | vollentsalztes Wasser |
| 1 Teil | 2-N-Acrylamido-2-tetradecan-sulfonsäure |
| 1 Teil | Ammoniumpersulfat und |
| 400 Teile | Acrylsäureäthylester |

emulgiert, nachdem der pH-Wert mit NaOH auf 5 eingestellt worden war. Die Emulsion war nach 2 Stunden noch völlig stabil.

In weiteren Versuchen wurden anstelle von 2-N-Acrylamido-2-tetradecan-sulfonsäure die in untenstehender Tabelle aufgeführten Homologen verwendet.

Stabilität der Emulsionen
(Die Emulsionen gelten als stabil, wenn in 2 Std. <10 % Entmischung eintritt)

| Einbaufähiger Emulgator | Entmischung der Emulsion nach 2 Stunden |
|---|---|
| 2-N-Acrylamido-2-tetradecan-sulfonsäure | stabil |
| 2-N-Acrylamido-2-dodecan-sulfonsäure | stabil |
| 2-N-Acrylamido-2-decan-sulfonsäure | stabil |

Vergleichsversuche

| | |
|---|---|
| 2-N-Acrylamido-2-(2,4,4-trimethylpentan)-sulfonsäure | 50% entmischt |
| 2-N-Acrylamido-2-hexan-sulfonsäure | 85% entmischt |
| 2-N-Acrylamido-2-butan-sulfonsäure | 100% entmischt |

Beispiel 2

In einem 1-l-Becherglas werden mittels eines Turbinenrührers in 3 Minuten bei 4000 UpM

| | |
|---|---|
| 240 Teile | vollentsalztes Wasser |
| 0,4 Teile | 2-N-Acrylamido-2-tetradecan-sulfonsäure |
| 1 Teil | Ammoniumpersulfat |
| 398 Teile | Acrylsäurebutylester und |
| 2 Teile | Methacrylsäure |

emulgiert. Die Emulsion war nach 2 Stunden noch völlig stabil.

Analog wurde mit Homologen der 2-N-Acrylamido-2-tetradecan-sulfonsäure verfahren. Die Stabilität der jeweiligen Emulsion ist in nachstehender Tabelle angegeben.

| Einbaufähiger Emulgator | Entmischung der Emulsion nach 2 Stunden |
|---|---|
| 2-N-Acrylamido-2-tetradecan-sulfonsäure | stabil |
| 2-N-Acrylamido-2-dodecan-sulfonsäure | stabil |
| 2-N-Acrylamido-2-decan-sulfonsäure | stabil |

Vergleichsversuche

| | |
|---|---|
| 2-N-Acrylamido-2-(2,4,4-trimethylpentan)-sulfonsäure | 20% |
| 2-N-Acrylamido-2-hexan-sulfonsäure | 90% |
| 2-N-Acrylamido-2-butan-sulfonsäure | 100% |

Beispiel 3

In einem 1-l-Rührkolben wurden 158,6 Teile vollentsalztes Wasser unter Rühren auf 80° C erhitzt und mit 0,16 Teilen 2-N-Acrylamido-2-tetradecan-sulfonsäure, 5 Teilen Acrylsäureäthylester sowie 1,6 Teilen einer 10%igen Ammoniumpersulfatlösung versetzt. Dann wurde in 4 Stunden bei dieser Temperatur eine Emulsion aus

| | |
|---|---|
| 240 Teilen | vollentsalztem Wasser |
| 1 Teil | 2-N-Acrylamido-2-tetradecan-sulfonsäure |
| 1 Teil | Ammoniumperoxidsulfat und |
| 395 Teilen | Acrylsäureäthylester, |

die mit NaOH auf pH 5 eingestellt worden war, zugetropft. Danach wurde auf Raumtemperatur

abgekühlt. Es entstand eine stabile koagulatfreie Dispersion mit ca. 50% Feststoffgehalt und einer Teilchengröße von ca. 200 nm.

Vergleichsversuche

Das Verfahren wurde mit dem Unterschied wiederholt, daß anstelle von 2-N-Acrylamido-2-tetradecan-sulfonsäure jeweils gleiche Mengen der kürzerkettigen Homologen

2-N-Acrylamido-2-(2,4,4-trimethylpentan)-sulfonsäure bzw.
2-N-Acrylamido-2-hexan-sulfonsäure bzw.
2-N-Acrylamido-2-butan-sulfonsäure

verwendet wurde. Die Dispersionen koagulierten während der Herstellung beim Zutropfen der teilweise oder ganz entmischten Emulsionen.

Beispiel 4

In einem 1-l-Rührkolben werden 158,6 Teile vollentsalztes Wasser unter Rühren auf 85° C erhitzt und mit 0,06 Teilen 2-N-Acrylamido-2-dodecan-sulfonsäure, 5 Teilen Acrylsäurebutylester und 1,6 Teilen einer 10%igen Ammoniumpersulfatlösung versetzt. Daraufhin wurde in ca. 3,5 Stunden bei dieser Temperatur eine Emulsion aus

| | |
|---|---|
| 240 Teilen | vollentsalztem Wasser |
| 0,4 Teilen | 2-N-Acrylamido-2-dodecan-sulfonsäure |
| 1 Teil | Ammoniumperoxodisulfat |
| 2,4 Teilen | Methacrylsäure und |
| 392,6 Teilen | Acrylsäurebutylester |

zugetropft. Es entstand eine stabile koagulatfreie Dispersion mit ca. 50% Feststoffgehalt und einer Teilchengröße von ca. 400 nm.

Beispiel 5

In einem 1-l-Rührkolben wurden 158,6 Teile vollentsalztes Wasser unter Rühren auf 80° C erhitzt und mit 1 Teil 2-N-Acrylamido-2-dodecan-sulfonsäure, 2,5 Teilen Acrylsäureäthylester und 1,6 Teilen einer 10%igen Ammoniumsulfatlösung versetzt. Dann wurden bei dieser Temperatur als Emulsion

| | |
|---|---|
| 230 Teile | vollentsalztes Wasser |
| 1 Teil | 2-N-Acrylamido-2-dodecan-sulfonsäure |
| 0,96 Teile | Ammoniumperoxodisulfat |
| 12 Teile | Methacrylsäureamid |
| 20 Teile | Methacrylsäure-N-methylolamid und |
| 368 Teile | Acrylsäureäthylester |

in ca. 4 Stunden zugetropft. Es entstand eine stabile koagulatfreie Dispersion mit ca. 50% Feststoffgehalt und einer Teilchengröße von ca. 150 nm.

Vergleichsversuch mit nicht polymerisierbarem Emulgiermittel

In einem 1-l-Rührkolben wurden 158,6 Teile vollentsalztes Wasser und 0,04 Teile eines sulfatierten und mit ca. 7 Mol Äthylenoxid oxäthylierten Tri-sec-butylphenols unter Rühren auf 80° C erhitzt und mit 1,6 Teilen einer 10%igen Ammoniumpersulfatlösung versetzt. Dann wurden bei dieser Temperatur als Emulsion

| | |
|---|---|
| 230 Teile | vollentsalztes Wasser |
| 6 Teile | sulfatiertes mit ca. 7 Mol Äthylenoxid oxäthyliertes Tri-sec-butylphenol |
| 0,96 Teile | Ammoniumpersulfat |
| 12 Teile | Methacrylsäureamid |
| 20 Teile | Methacrylsäure-N-methylolamid und |
| 368 Teile | Acrylsäureäthylester |

in ca. 4 Stunden zugetropft. Es entstand eine stabile koagulatfreie Dispersion mit ca. 50% Feststoffgehalt und einer Teilchengröße von ca. 200 nm.

Vergleich der anwendungstechnischen Eigenschaften der Dispersion gemäß Beispiel 5 und nach Vergleichsversuch

Prüfmethoden

Schaumvolumen:
100 ml der auf 10 Gew.-% Trockengehalt verdünnten Dispersion werden in einem graduierten zylindrischen Gefäß mit einem Flügelrührer bei 1380 UpM 1 min lang aufgerührt. Das Schaumvolumen 2 min nach Abstellen des Rührers wird in ml angegeben.

Bruchwiderstand und Naßbruchwiderstand an imprägniertem Filterpapier nach DIN 53 112.

BTV-Binder-Tri-Waschverlust:
Ein texturiertes Polyestergewebe wird mit der Dispersion so imprägniert, daß die Binderharzauflage 50 Gew.-% des Gewebetrockengewichts ausmacht. Der Binderverlust nach Wäsche mit Trichloräthylen wird in Prozent, bezogen auf den anfänglichen Bindergehalt, angegeben.

BKV-Binder-Kochwaschverlust:
Das gleiche imprägnierte Gewebe wird einer Kochwäsche unterzogen und der Binderverlust in Prozent ermittelt.

Ergebnisse

| Dispersion | Emulgator | Schaum-volumen [ml] | Bruchwiderstand naß [N] | Bruchwiderstand trocken [N] | BTV [%] | BKV [%] |
|---|---|---|---|---|---|---|
| Beispiel 5 | einpolymerisiert | 130 | 90 | 150 | 4 | 2 |
| Vergleichsversuch | niedermolekular | 400 | 60 | 120 | 5 | 4 |

Beispiel 6

In einem 1-l-Rührkolben wurden 155 Teile vollentsalztes Wasser, 0,8 Teile einer 100%igen Essigsäure und 2 Teile Borax unter Rühren auf 80° C erhitzt und mit 0,4 Teilen 2-N-Acrylamido-2-decan-sulfonsäure, 5 Teilen Vinylacetat sowie 4,8 Teilen einer 10%igen Ammoniumpersulfatlösung versetzt. Dann wurden bei dieser Temperatur eine Emulsion aus

| | |
|---|---|
| 320 Teilen | vollentsalztem Wasser |
| 2,4 Teilen | 1-N-Acrylamido-2-decan-sulfonsäure |
| 1,2 Teilen | Ammoniumperoxodisulfat und |
| 315 Teilen | Vinylacetat |

in ca. 6 Stunden zugetropft. Es entstand eine stabile koagulatfreie Dispersion mit ca. 40% Feststoffgehalt und einer mittleren Teilchengröße von ca. 500 nm.

Beispiel 7

In einem 1-l-Rührkolben wurden 158,2 Teile vollentsalztes Wasser unter Rühren auf 85° C erhitzt und mit 0,16 Teilen 2-N-Acrylamido-2-decan-sulfonsäure, 5 Teilen Styrol und 2 Teilen einer 10%igen Ammoniumperoxodisulfatlösung versetzt. Dann wurden als Emulsion

| | |
|---|---|
| 230 Teile | vollentsalztes Wasser |
| 1 Teil | 2-N-Acrylamido-2-decan-sulfonsäure |
| 1,2 Teile | Ammoniumpersulfat |
| 191 Teile | Styrol |
| 196 Teile | Acrylsäureäthylester und |
| 8 Teile | Methacrylsäureamid |

in 5 Stunden zugetropft. Es entstand eine stabile koagulatfreie Dispersion mit ca. 50% Feststoffgehalt und einer Teilchengröße von ca. 250 nm.

Beispiel 8

In einem 1-l-Rührkolben wurden 158,2 Teile vollentsalztes Wasser unter Rühren auf 80° C erhitzt und mit 0,16 Teilen 2-N-Acrylamido-2-dodecan-sulfonsäure, 5 Teilen Acrylsäurebutylester und 2 Teilen einer 10%igen wäßrigen Lösung des Na-Salzes der 4,4'-Azobis-(4-cyanovaleriansäure) versetzt. Dann wurde bei dieser Temperatur eine Emulsion aus

| | |
|---|---|
| 230 Teilen | vollentsalztem Wasser |
| 2 Teilen | 2-N-Acrylamido-2-dodecan-sulfonsäure |
| 1,6 Teilen | Na-Salz der 4,4'-Azobis-(4-canovaleriansäure) |
| 315 Teilen | Acrylsäurebutylester und |
| 80 Teilen | Methacrylsäure-2-dimethylamino-äthylester |

in ca. 5 Stunden zugetropft. Es entstand eine stabile koagulatfreie Dispersion mit ca. 50% Feststoffgehalt und einer Teilchengröße von ca. 450 nm.

Beispiel 9

In einem 1-l-Rührkolben wurden 158,6 Teile vollentsalztes Wasser und 1,6 Teile Natriumsulfat unter Rühren auf 80°C erhitzt und mit 0,04 Teilen 2-N-Acrylamido-2-tetradecan-sulfonsäure, 5 Teilen Acrylsäurebutylester sowie 1,6 Teilen einer 10%igen Ammoniumpersulfatlösung versetzt. Dann wurden bei dieser Temperatur als Emulsion

| | |
|---|---|
| 160 Teile | vollentsalztes Wasser |
| 0,64 Teile | 2-N-Acrylamido-2-tetradecan-sulfonsäure |
| 0,72 Teile | Ammoniumpersulfat |
| 2,4 Teile | Methacrylsäure und |
| 472,6 Teile | Acrylsäurebutylester |

in ca. 4 Stunden zugetropft. Es entstand eine stabile koagulatfreie Dispersion mit ca. 60% Feststoffgehalt und einer Teilchengröße von ca. 750 nm.

Beispiele 10—12 (Steuerung der Teilchengröße)

In einem 1-l-Rührkolben wurden 220 Teile vollentsalztes Wasser und 2,25 Teile einer 1%igen wäßrigen Lösung von 2-N-Acrylamido-2-tetradecan-sulfonsäure auf 80°C erhitzt und bei dieser Temperatur mit 0,225 Teilen 2,2'-Azobis-(isobutyronitril), gelöst in 5 Teilen Methacrylsäuremethylester, versetzt. Sodann wurde eine Emulsion aus

| | |
|---|---|
| 333 Teilen | vollentsalztem Wasser |
| 0,9 Teilen | 2-N-Acrylamido-2-tetradecan-sulfonsäure |
| 445 Teilen | Methacrylsäuremethylester |
| 2 Teilen | 2,2'-Azobis-(isobutyronitril) und |
| 0,4 Teilen | 2-Äthylhexylthioglycolat |

innerhalb von ca. 4 Stunden zugetropft. Die Dispersion wurde nach Abschluß des Emulsionszulaufs noch 2 Stunden bei 80° C nacherhitzt und auf Zimmertemperatur abgekühlt.

Das Verfahren wurde mit dem Unterschied wiederholt, daß anstelle von 2,25 Teilen 6,75 Teile bzw. 22,5 Teile einer 1%igen wäßrigen Lösung von 2-N-Acrylamido-2-tetradecan-sulfonsäure zu Beginn der Polymerisation verwendet werden. Die sich dabei einstellenden Teilchengrößen sind in nachfolgender Tabelle angegeben.

| Beispiel | Emulgator (1 %ige wäßrige Lösung) | Teilchengröße |
|---|---|---|
| 10 | 2,25 Teile | 520 mm |
| 11 | 6,75 Teile | 370 mm |
| 12 | 22,5 Teile | 250 mm |

**Patentansprüche**

1. Von ionischen Emulgiermitteln frei wäßrige Kunststoffdispersion, enthaltend eine wäßrige Phase und eine wasserunlösliche disperse Phase aus Teilchen eines Mischpolymerisats, das aus 0,05 bis 5% (bezogen auf das Gewicht des Mischpolymerisats) Monomeren der Formel

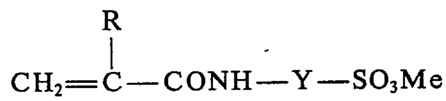

in der

R Wasserstoff oder eine Methylgruppe
Y ein Alkylrest
Me ein Proton, ein Alkalimetallion oder ein Ammoniumion ist,

und zu einem wesentlichen Teil aus nicht oder höchstens begrenzt wasserlöslichen Monomeren aufgebaut ist, dadurch gekennzeichnet, daß der Alkylrest Y die Struktur

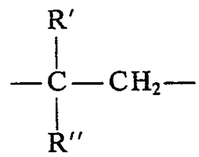

hat, worin R′ Wasserstoff oder ein Alkylrest mit 1 bis 12 C-Atomen und R″ ein Alkylrest mit 7 bis 20 C-Atomen ist, und daß die wäßrige Phase der Dispersion frei von niedermolekularen ionischen Emulgiermitteln ist.

2. Kunststoffdispersion nach Anspruch 1, dadurch gekennzeichnet, daß sie frei von niedermolekularen nichtionischen Emulgiermitteln ist.

3. Kunststoffdispersion nach den Ansprüchen 1 oder 2, dadurch gekennzeichnet, daß das dispergierte Mischpolymerisat zu mindestens 40 Gew.-% aus Einheiten von nicht oder wenig wasserlöslichen Monomeren aufgebaut ist.

4. Kunststoffdispersion nach Anspruch 3, dadurch gekennzeichnet, daß die nicht oder wenig wasserlöslichen Monomeren überwiegend aus Alkylestern der Acryl- oder/und Methacrylsäure mit 1 bis 18 C-Atomen im Alkylrest bestehen.

5. Kunststoffdispersion nach den Ansprüchen 3 oder 4, dadurch gekennzeichnet, daß das dispergierte Mischpolymerisat zu mehr als 60 Gew.-% aus Alkylestern der Acryl- und/oder Methacrylsäure mit 1 bis 8 C-Atomen im Alkylrest aufgebaut ist.

6. Kunststoffdispersion nach den Ansprüchen 1 bis 5, gekennzeichnet durch einen Anteil der dispersen Phase von 30 bis 65 Gew.-%, bezogen auf das Gesamtgewicht der Dispersion.

7. Kunststoffdispersion nach den Ansprüchen 1 bis 6, gekennzeichnet durch eine überwiegende Teilchengröße zwischen 0,05 und 1 µm, bevorzugt zwischen 0,05 und 0,6 µm.

8. Verfahren zur Herstellung von wäßrigen Kunststoffdispersionen, die frei von ionischen Emulgiermitteln sind, durch radikalische Emulsionspolymerisation eines Monomerengemisches, das zu 0,05 bis 5% (bezogen auf das Gewicht der Monomeren) aus Monomeren der Formel

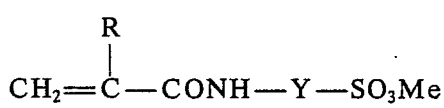

wobei R, Y und Me die im Anspruch 1 angegebene Bedeutung haben, und zu einem wesentlichen Teil aus nicht oder höchstens begrenzt wasserlöslichen Monomeren aufgebaut ist, dadurch gekennzeichnet, daß die wäßrige Phase des Emulsionspolymerisationsansatzes keine anderen als die oben formelmäßig bezeichneten ionischen Emulgiermittel enthält und daß die Gruppe Y in der Formel die Struktur

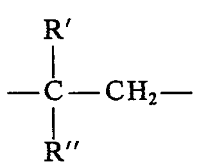

hat, worin R′ und R″ die im Anspruch 1 angegebene Bedeutung haben.

9. Verfahren nach Anspruch 8, dadurch gekennzeichnet, daß die Monomeren wenigstens zu einem

wesentlichen Teil in Form einer wäßrigen Emulsion eingesetzt werden, die das im Anspruch 1 formelmäßig bezeichnete Monomer als Emulgiermittel enthält.

**Claims**

1. Aqueous plastics dispersion free from ionic emulsifiers, containing an aqueous phase and a water-insoluble dispersed phase of particles of a copolymer which consists of 0.05 to 5% (based on the weight of the copolymer) of monomers of formula

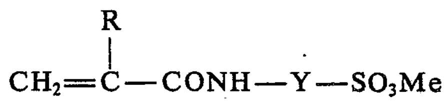

wherein

R represents hydrogen or a methyl group,
Y represents an alkyl group and
Me is a proton, an alkali metal ion or an ammonium ion,

and of a substantial proportion of monomers which are insoluble in water or at most have limited solubility in water, characterised in that the alkyl group Y has the structure

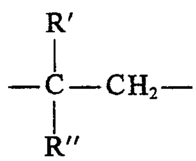

wherein R′ represents hydrogen or an alkyl group with 1—12 carbon atoms and R″ represents an alkyl group with 7—20 carbon atoms, and in that the aqueous phase of the dispersion is free from low-molecular ionic emulsifiers.

2. Plastics dispersion as claimed in claim 1, characterised in that it is free from low-molecular non-ionic emulsifiers.

3. Plastics dispersion as claimed in claim 1 or 2, characterised in that the dispersed copolymer consists of at least 40% by weight of units of monomers which are insoluble in water or have limited solubility in water.

4. Plastics dispersion as claimed in claim 3, characterised in that the monomers which are insoluble in water or have limited solubility in water consist predominantly of alkyl esters of acrylic and/or methacrylic acid with 1—18 carbon atoms in the alkyl group.

5. Plastics dispersion as claimed in claim 3 or 4, characterised in that more that 60% by weight of the dispersed copolymer consists of alkyl esters of acrylic and/or methacrylic acid with 1—8 carbon atoms in the alkyl group.

6. Plastics dispersion as claimed in claims 1 to 5, characterised in that the dispersed phase constitutes from 30—65% by weight, based on the total weight of the dispersion.

7. Plastics dispersion as claimed in claims 1 to 6, characterised by a particle size of predominantly between 0.05 and 1 μm, preferably between 0.05 and 0.6 μm.

8. Process for the preparation of aqueous plastics dispersions which are free from ionic emulsifiers, by radical emulsion polymerisation of a monomer mixture which consists of 0.05—5% (based on the weight of the monomers) of monomers of formula

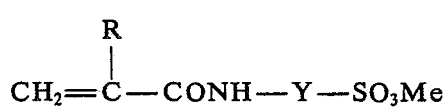

wherein R, Y and Me are defined as in claim 1, and of a substantial proportion of monomers which are insoluble in water or at most have limited solubility in water, characterised in that the aqueous phase of the emulsion polymerisation mixture contains no ionic emulsifiers other than those denoted by the above formula and in that the group Y in the formula has the structure

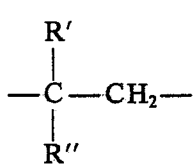

wherein R′ and R″ have the meanings given in claim 1.

9. Process as claimed in claim 8, characterised in that the monomers are used, at least to a considerable extent, in the form of an aqueous emulsion which contains, as emulsifier, the monomer denoted by the formula in claim 1.

**Revendications**

1. Dispersion aqueuse de matière synthétique, exempte d'émulsionnants ioniques, contenant une phase aqueuse et une phase dispersée, insoluble dans l'eau, de particules d'un copolymère qui se compose de 0,05 à 5% (par rapport au poids du copolymère) de monomères de formule

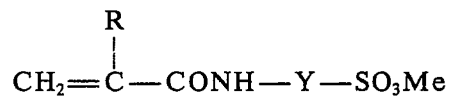

dans laquelle

R est un hydrogène ou un groupe méthyle,
Y est un radical alcoyle,
Me est un proton, un ion métal alcalin ou un ion ammonium,

et, pour l'essentiel, de monomères non solubles ou, tout au plus, solubles de façon limitée dans l'eau, caractérisée en ce que le le radical alcoyle Y a la structure

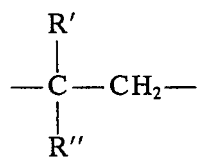

dans laquelle R′ est un hydrogène ou un radical alcoyle à 1—12 atomes de C et R″ est un radical alcoyle à 7—20 atomes de C, et en ce que la phase aqueuse de la dispersion est exempte d'émulsionnants ioniques de faible poids moléculaire.

2. Dispersion de matière synthétique selon la revendication 1, caractérisée en ce qu'elle est exempte d'émulsionnants non ioniques de faible poids moléculaire.

3. Dispersion de matière synthétique selon la revendication 1 ou 2, caractérisée en ce que le copolymère dispersé composé, pour au moins 40% en poids, d'unités de monomères non ou peu solubles dans l'eau.

4. Dispersion de matière synthétique selon la revendication 3, caractérisée en ce que les monomères non ou peu solubles dans l'eau sont faits essentiellement d'esters alcoyliques des acides acrylique et/ou méthacrylique, contenant 1 à 18 atomes de C dans le radical alcoyle.

5. Dispersion de matière synthétique selon la revendication 3 ou 4, caractérisée en ce que le copolymère dispersé est composé, pour plus de 60% en poids, d'esters alcoyliques des acides acrylique et/ou méthacrylique, contenant 1 à 8 atomes de C dans le radical alcoyle.

6. Dispersion de matière synthétique selon l'une quelconque des revendications 1 à 5, caractérisée par une proportion de la phase dispersée de 30 à 65% en poids, sur la base du poids total de la dispersion.

7. Dispersion de matière synthétique selon l'une quelconque des revendications 1 à 6, caractérisée par une grosseur de particules prépondérante comprise entre 0,05 et 1 micron, de préference entre 0,05 et 0,6 micron.

8. Procédé pour la préparation de dispersions aqueuses de matières synthétiques qui sont exemptes d'émulsionnants ioniques, par polymérisation radicalaire en émulsion d'un mélange de monomères qui est composé, pour 0,05 à 5% (par rapport au poids des monoméres), de monomères de formule

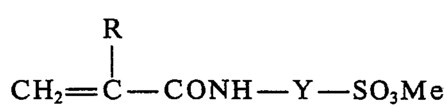

R, Y et Me ayant les significations données dans la revendication 1, et, pour une part essentielle, de monomères non solubles ou, tout au plus, solubles de façon limitée dans l'eau, caractérisé en ce que la phase aqueuse de la charge de polymérisation en émulsion ne contient pas d'autres émulsionnants que les émulsionnants ioniques définis par la formule ci-dessus, et en ce que le groupe Y dans la formule a la structure

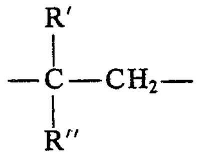

dans laquelle R′ et R″ ont les significations données dans la revendication 1.

9. Procédé selon la revendication 8, caractérisé en ce que les monomères sont introduits, en moins pour une part essentielle, sous la forme d'une émulsion aqueuse qui contient, en tant qu'émulsionnant, le monomère défini par sa formule dans la revendication 1.